# EUROPÄISCHE PATENTSCHRIFT

(11) **EP 2 306 809 B1**
(45) Veröffentlichungstag und Bekanntmachung des Hinweises auf die Patenterteilung: **03.07.2013**
(21) Anmeldenummer: 09718894.0
(22) Anmeldetag: 12.03.2009
(51) Int. Cl.: A01K 1/06

(54) **BEHANDLUNGSSTAND FÜR TIERE**
TREATMENT PLATFORM FOR ANIMALS
DISPOSITIF DE TRAITEMENT POUR ANIMAUX

(30) Priorität: 13.03.2008 DE 102008014114; 13.03.2008 DE 202008003585 U
(43) Veröffentlichungstag der Anmeldung: 13.04.2011
(73) Patentinhaber: MLS Lanny GmbH, 75323 Bad Wildbad (DE)
(72) Erfinder: LANNY, Michael, 75323 Bad Wildbad (DE)
(74) Vertreter: Leitner, Waldemar
(86) Internationale Anmeldenummer: PCT/EP2009/001759
(87) Internationale Veröffentlichungsnummer: WO 2009/112253

(56) Entgegenhaltungen:
- DD-A1- 219 096
- DE-U1- 9 216 027
- DE-U1- 29 713 038
- DE-U1-202005 012 174

## Beschreibung

Die Erfindung betrifft einen Behandlungsstand für Tiere, insbesondere Huftiere, der zwei voneinander beabstandet angeordnete, einen Innenraum des Behandlungsstandes festlegende Seitenwandungen aufweist, und der an mindestens einem Ende ein Sperrelement aufweist, durch welches ein durch die beiden Seitenwandungen begrenzter Durchgang absperrbar ist.

Aus der DE 20 2005 012 174 ist ein Behandlungs- und Trainingsstand für Tiere bekannt, der eine einen Innenraum festlegende Umfangswandung, welche wenigstens eine Eingangstür aufweist, und eine Bodenplatte, mit welcher die Umfangswandung unmittelbar verbunden ist, besitzt. Die Bodenplatte ist mit einer Vibrationseinrichtung versehen, welche so ausgebildet ist, dass sie das Tier im stehenden Zustand aufnimmt, um die von ihr erzeugten Vibrationen auf das Tier zu übertragen. Die Umfangswandung ist hierbei als eine allseitig geschlossene und sich von der Bodenplatte bis zu ihrem oberen Rand ohne Unterbrechung erstreckende Umfangsfläche ausgeführt, die nur durch die am hinteren Ende des Behandlungs- und Trainingsstandes angeordnete Eingangstür unterbrochen ist. Die Höhe dieser Umfangswandung ist dabei derart bemessen, dass ein Kopf- und ggfs. ein Halsbereich des Tieres, welches sich in dem durch die Umfangswandung begrenzten Innenraum befindet, über deren oberen Rand hervorragt. Diese vollständig geschlossene Ausbildung der Umfangswandung besitzt den Nachteil, dass in einem derartig ausgebildeten Behandlungs- und Trainingsstand das darin aufgenommene Tier eingesperrt und fixiert wird. Er ist praktisch nur dazu geeignet, dass in ihm befindliche Tier mit dem durch die Bodenplatte erzeugten Vibrationen zu beaufschlagen. Eine Behandlung des Tieres ist kaum möglich, da ein Tierarzt oder ein Trainer in Folge der geschlossenen Ausbildung der Umfangswandung bestenfalls auf den Rücken und auf den Hals des Tieres zugreifen kann. Dies ist insbesondere bei Huftieren wie Kamelen oder Pferden, insbesondere bei Sportpferden oder Rennkamelen, von Nachteil, da deren Beine hohen Belastungen ausgesetzt sind und diese daher besonders verletzungsanfällig sind. Eine Behandlung der Beine z. B. eines Pferdes ist bei dem bekannten Behandlungsstand nicht möglich, da - wie oben beschrieben - die behandelnde Person in Folge der geschlossenen Umfangswandung hierzu keinen Zugang hat.

Aus der DE 297 13 038 U1 ist ein Behandlungsstand für Huftiere bekannt, welcher dazu dient, dass eine zwangsweise Ruhigstellung des im Behandlungsstand aufgenommenen Huftieres weitgehend schmerzarm für das Huftier und der Behandlungsstand einfach im Aufbau und wartungsarm ist. Hierzu ist vorgesehen, dass der Behandlungsstand als eine Rahmenkonstruktion ausgebildet ist, die untere und obere Querstreben aufweist, die jeweils mit vorderen und hinteren Stützstreben verbunden sind. Die untere Querstrebe ist im vorderen Bereich, unmittelbar neben der vorderen Stützstrebe, nach außen und oben ausgestellt und in einer solchen Höhe vom Boden an der vorderen Stützstrebe angebracht, dass der ausgestellte Bereich der unteren Querstrebe die Schulter des Huftieres aufnimmt und stützt. Die obere Querstrebe des Behandlungsstandes dient dessen Stabilisierung während der Behandlung. An den vorderen Stützstreben ist eine Austrittstür angeordnet, die aus zwei beweglichen Flügeln besteht, die einen offenen Rahmen bilden. Die Flügel der Austrittstür sind in der Ausgangsposition, also beim Einlaufen des Huftieres in den Behandlungsstand, leicht nach innen gewinkelt, so dass das Huftier die Flügel mit den Schultern nach außen stößt und einen Verriegelungsmechanismus, der auf der Rahmenkonstruktion angebracht ist, auslöst. Der Kopf des Huftieres befindet sich unter Gewährleistung einer vertretbaren Beweglichkeit zwischen den inneren seitlichen Holmen der Flügel an den Schultern des Huftieres ruhen in den seitlichen Ausstellungen die untere Querstrebe. Hierdurch soll ein ruhiges Stehen des Huftieres im Behandlungsstand gewährleistet werden. Wenn das Huftier im vorderen Teil des Behandlungsstandes zur Ruhe gestellt ist, wird an der anderen Seite des Behandlungsstandes ein Rahmen, der einen Spritzschutz aufweist, heruntergelassen und schließt damit den Behandlungsstand. Dann wird vom Klauenpfleger ein Bauchgurt um das Huftier gelegt und das Huftier wird am Bauchgurt bis zur Entlastung der Vorderfüße angehoben.

Auch ein derartiger Behandlungsstand zeichnet sich in nachteiliger Art und Weise dadurch aus, dass das in ihm befindliche Tier eingesperrt und zu seiner Behandlung fixiert werden muss. Der bekannte Behandlungsstand erlaubt zwar auf Grund seiner Rahmenkonstruktion, dass die das im Behandlungsstand aufgenommene Tier behandelnde Person auf dieses zugreifen kann. Jedoch ist hierbei die Gefahr gegeben, dass Gliedmaßen des Behandlers, insbesondere Hände oder Arme, abgeschert oder zumindest gebrochen werden können, wenn - z. B. durch eine Panikreaktion des Tiers - dieses den Arm oder die Hand des Behandlers gegen ein Element der Rahmenkonstruktion drückt.

Aus der DE 102 46 455 B4 ist ein Behandlungsstand für Tiere bekannt, der einen im wesentlich rechteckförmigen Grundrahmen besitzt, der durch zwei vertikale Hinterpfosten und zwei vertikale Vorderpfosten, sowie mit diesem Pfosten verbundene obere, mittlere und vertikale Querstreben ausgebildet ist. Am unteren Ende der vertikalen Pfosten ist jeweils ein Ausleger angeordnet, an den nach außen beabstandet über eine Achse drehbare Räder angebracht sind.

Es ist daher Aufgabe der vorliegenden Erfindung, einen Behandlungsstand der eingangs genannten Art derart weiterzubilden, ein ausreichend sicherer Zugriff einer außerhalb des Behandlungsstandes befindlichen Person auf das Tier ermöglicht wird.

Diese Aufgabe wird erfindungsgemäß dadurch gelöst, dass die Seitenwandungen beabstandet von der durch die unteren Enden der Füße des Behandlungsstands festgelegten Ebene angeordnet sind, und dass an den Seitenwandungen nach außen ausladend abstehende und schräg nach unten verlaufende Füße angreifen, deren Auftreffpunkte auf eine den Behandlungsstand tragende Unterlage beabstandet von den durch die Seitenwandungen festgelegten Ebenen sind.

Durch die erfindungsgemäßen Maßnahmen wird in vorteilhafter Art und Weise ein Behandlungsstand geschaffen, der sich dadurch auszeichnet, dass die von den Seitenwandungen ausgehenden und - vorzugsweise weit - ausladenden Füße außerhalb des Schlagbereichs der Beine des Tieres sind, so dass sich dieses auch bei einem plötzlichen Ausschlagen nicht verletzen kann. Durch die hochgezogene Ausbildung der Seitenwandungen ist der Beinbereich des Tieres für den Behandler leicht zugänglich, so dass gute Behandlungsmöglichkeiten für das im erfindungsgemäßen Behandlungsstand aufgenommene Tier bestehen. Da dieser Behandlungsbereich im wesentlichen frei von Bauteilen des Behandlungsstands ist besteht beim erfindungsgemäßen Behandlungsstand nicht mehr die Gefahr, dass ein Arm oder eine Hand des Behandlers durch eine Beaufschlagung durch eine Extremität des Tieres abgeschert oder gebrochen wird, wie es z. B. in nachteiliger Art und Weise bei den bekannten Behandlungsständen der Fall sein kann, die im Beinbereich Quer- oder Längsstreben aufweisen, gegen die eine Extremität des Behandlers ungewollt gepresst werden kann. Ein weiterer Vorteil des beschriebenen Behandlungsstands besteht darin, dass auf Grund der breiten Ausladung der an den Seitenwandungen angreifenden Füße der Behandlungsstand hinreichend standfest ist, so dass es in vorteilhafter Art und Weise nicht zwingend erforderlich ist, dass der Behandlungsstand fest mit dem ihn tragenden Untergrund verbunden ist.

Eine vorteilhafte Weiterbildung der Erfindung sieht vor, dass der Behandlungsstand wesentlich länger als die Länge des in ihm zu behandelnden Tieres ist. Eine derartige Maßnahme besitzt den Vorteil, dass hierdurch das Tier in der Längsrichtung des Behandlungsstands positioniert werden kann, was insbesondere von Vorteil ist, wenn ein externes Behandlungsgerät verwendet wird, da hierdurch das im Behandlungsstand aufgenommene Tier in entsprechender Art und Weise zum Behandlungsgerät ausgerichtet werden kann.

Eine weitere vorteilhafte Weiterbildung der Erfindung sieht vor, dass der Behandlungsstand wesentlich breiter als die Breite des in ihm zu behandelnden Tieres ist. Eine derartige Maßnahme besitzt den Vorteil, dass hierdurch das im Behandlungsstand aufgenommene Tier diesen zwar nicht verlassen kann, aber in ihm hinreichende Bewegungsfreiheit hat, um für die speziell vorzunehmende Behandlung in einer entsprechenden Lage positioniert zu werden oder sich selbst zu positionieren.

Eine weitere vorteilhafte Weiterbildung der Erfindung sieht vor, dass mindestens eine Seitenwandung durch eine Konstruktion aus Längsstreben und Stützstreben ausgebildet ist, wobei zwischen mindestens zwei Längsstreben mindestens ein freier Zwischenraum vorhanden ist. Eine derartige Ausgestaltung des erfindungsgemäßen Behandlungsstandes besitzt den Vorteil, dass jedoch auch der Rumpfbereich des zu behandelnden Tieres für einen Behandler gut zugänglich ist.

Eine weitere vorteilhafte Weiterbildung der Erfindung sieht vor, dass der erfindungsgemäße Behandlungsstand an seinem vorderen Ende auskragend ausgeführt ist. Eine derartige Maßnahme besitzt den Vorteil, dass hierdurch der Behandler guten Zugang zu dem vorderen Bereich des Tieres hat.

Eine weitere vorteilhafte Weiterbildung der Erfindung sieht vor, dass an mindestens einer Seitenwandung ein Schlagschutz angeordnet ist. Eine derartige Maßnahme besitzt den Vorteil, dass hierdurch der Beinbereich des Tieres - falls erforderlich - gut abgeschirmt werden kann.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Figuren beschrieben werden. Es zeigen:
- Figur 1:: eine perspektivische Darstellung eines ersten Ausführungsbeispiels einer Vorrichtung,
- Figur 2:: eine Seitenansicht des ersten Ausführungsbeispiels,
- Figur 3:: eine Vorderansicht des ersten Ausführungsbeispiels,
- Figur 4:: eine beispielhafte Behandlung eines Pferdes in einem Behandlungsstand gemäß den Figuren 1 bis 3, und
- Figur 5:: eine perspektivische Ansicht eines zweiten Ausführungsbeispiels.

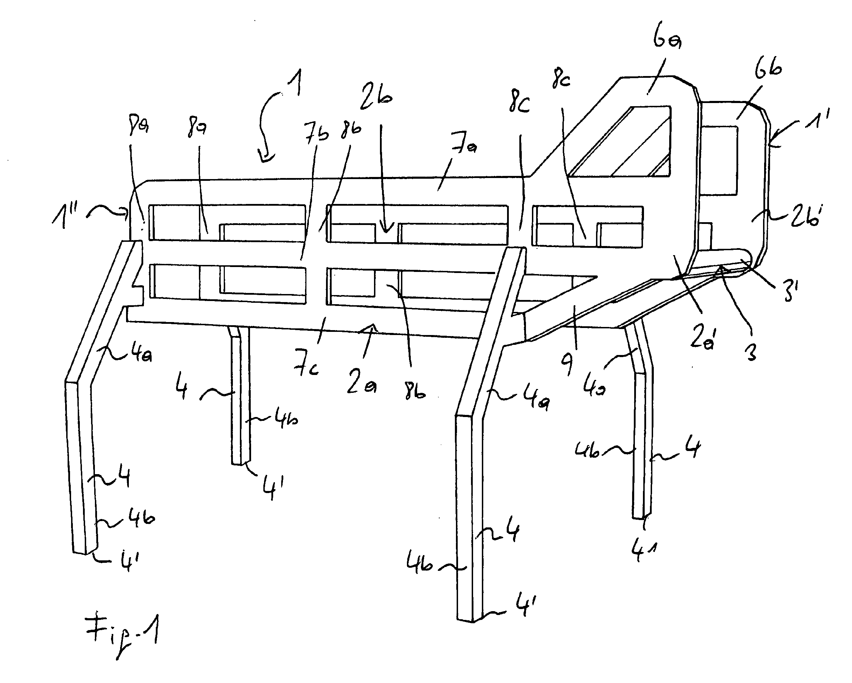

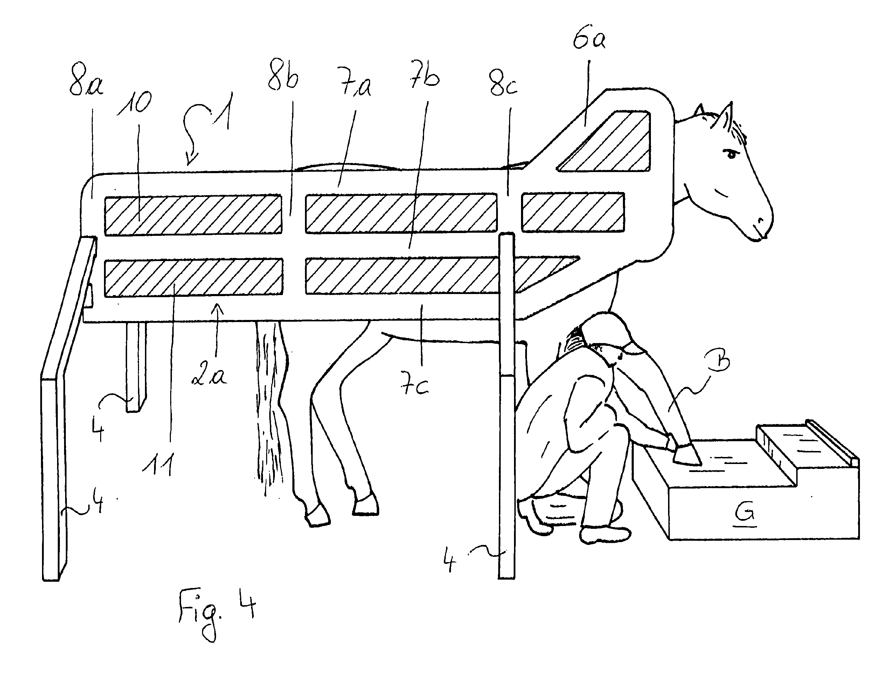

In den Figuren 1 bis 4 ist ein allgemein mit 1 bezeichnetes erstes Ausführungsbeispiel eines Behandlungsstands für Tiere, insbesondere für Huftiere, dargestellt. Der Einfachheit der Beschreibung halber wird im folgenden lediglich von "Behandlungsstand" gesprochen, wobei aber unter diesem Begriff natürlich auch ein Trainingsstand oder ein "Behandlungs- und Trainingsstand" zu verstehen ist. Der Behandlungsstand 1 weist zwei Seitenwandungen 2a und 2b auf, welche im hier gezeigten Ausführungsbeispiel an ihren vorderen Ende 2a', 2b' über eine Querstrebe 3' verbunden sind. Das in dem durch die beiden Seitenwandungen 2a, 2b begrenzten Innenraum des Behandlungsstands 1 aufgenommene Tier, insbesondere ein Pferd (siehe Figur 4), ist durch diese als Sperrelement 3 fungierende Querstrebe 3' gehindert ist, den Behandlungsstand 1 an dessem vorderen Ende 1' in Vorwärtsrichtung zu verlassen. Das Sperrelement 3 kann fest mit den beiden Seitenwandungen 2a, 2b verbunden sein. Es ist aber auch möglich, dass das Sperrelement 3 derart ausgebildet ist, dass durch seine entsprechende Entriegelung der vordere Durchgang des Behandlungsstandes 1 frei gegeben werden kann, so dass das Pferd den Behandlungsstand 1 in Vorwärtsrichtung verlassen kann. Es kann vorgesehen sein, dass der Eingang des Behandlungsstandes 1, also dessen hinteres Ende 1", durch eine weiter Querstrebe oder ein sonstiges weiteres Sperrelement verschließbar ist.

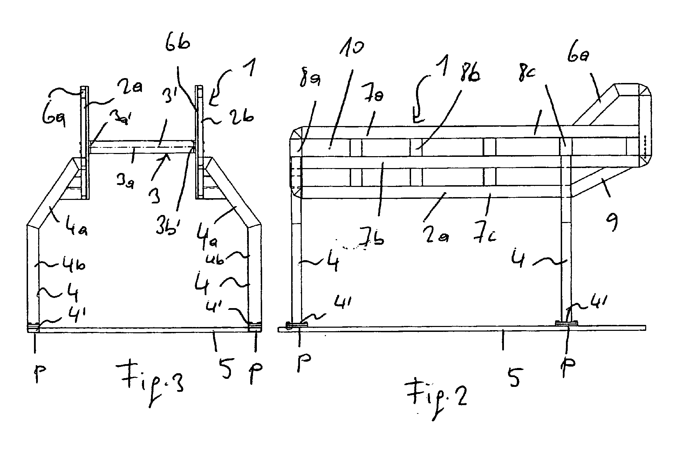

An die Seitenwandungen 2a, 2b greifen jeweils Füße 4 an, die auf einer Bodenplatte 5 (siehe Figuren 2 und 3) aufsetzen und vorzugsweise mit der Bodenplatte 5 fest verbunden sind. Es ist aber auch möglich, dass die Füße 4 direkt auf einen den Behandlungsstand 1 tragenden Boden aufsetzen und vorzugsweise in diesem verankert sind.

Die die beiden Seitenwandungen 2a, 2b verbindenden Füße 4 verlaufen nun nicht - wie es bei den bekannten Behandlungsständen der Fall ist - im wesentlichen in der Ebene der Seitenwandungen 2a, 2b, sondern - wie aus den Figuren leicht ersichtlich ist - von den Seitenwandungen 2a, 2b nach außen ausladend abstehend, so dass der Aufsetzpunkt P der Füße 4 auf die Bodenplatte 5 oder auf den Boden - wie am besten aus Figur 3 ersichtlich - weit entfernt von den durch die Seitenwandungen 2a, 2b festgelegten Ebenen ist.

Wie aus den Figuren ersichtlich, lassen die Seitenwandungen 2a, 2b den unteren Bereich des Behandlungsstandes 1 frei und sind im wesentlichen in der Höhe des Rumpfbereichs des zu behandelnden Tieres (siehe Figur 4) angeordnet, derart, dass dieses durch die beiden Seitenwandungen 2a, 2b gehindert ist, den Behandlungsstand 1 in seitlicher Richtung zu verlassen.

In dem hier gezeigten Fall sind die Füße 4 -wie leicht aus den Figur 1 und 3 ersichtlich ist - derart ausgeführt, dass die Füße 4 einen oberen Bereich 4a aufweisen, der von der jeweiligen Seitenwandung 2a, 2b ausgehend schräg nach unten verläuft und dann in einen zweiten Bereich 4b übergeht, der im wesentlichen parallel zu der durch die jeweilige Seitenwandung 2a, 2b aufgespannten Ebene ist. Durch diese weit ausladende Konstruktion sind die unteren Enden 4' der Füße 4 des Behandlungsstands 1 somit weit entfernt von den durch die Seitenwandungen 2a, 2b festgelegten Ebenen. Eine derartige Ausgestaltung besitzt den Vorteil, dass hierdurch eine große Standfestigkeit des Behandlungsstands 1 gegeben ist, so dass dieser nicht zwingend auf dem durch die Bodenplatte 5 oder den Boden ausgebildeten Untergrund fest verankert werden muss. Bevorzugt wird hierbei, dass an den unteren Enden 4' der Füße 4 eine rutschhemmende Auflage angeordnet ist, welche einem Verrücken des Behandlungsstands 1 entgegenwirkt.

Auch ist klar ersichtlich, dass die vorstehend beschriebene, bogen- oder brückenförmige Ausgestaltung der Füße 4 mit einem schräg verlaufenden oberen Bereich 4a und einem wesentlichen senkrecht verlaufenden unteren Bereich 4b nicht zwingend ist. Es kann z. B. auch sein, dass die Füße 4 im wesentlichen geradlinig von der Seitenwand 2a, 2b ausgehend zur Bodenplatte 5 oder dem Boden hin verlaufen. Auch eine Kombination der vorgenannten beiden Ausbildungen sowie die davon abweichende Ausgestaltungen der einzelnen Füße sind möglich, solange hierdurch eine ausladende Anordnung der Füße 4 erreicht wird.

Die vorstehend beschriebene Ausgestaltung des Behandlungsstandes 1 besitzt nun den Vorteil, dass die Beine des Tieres sehr gut zugänglich sind, da der untere Bereich des Behandlungsstandes 1, also der "Beinbereich", nicht von den Seitenwandungen 2a, 2b abgedeckt wird. Die weit nach außen ausgestellten Füße 4 des Behandlungsstandes 1 besitzen den Vorteil, dass die Füße 4 außerhalb des Schlagbereichs der Beine des Tieres sind, so dass dieses sich auch bei einem plötzlichen Ausschlagen nicht verletzen kann. Ein weiterer Vorteil der beschriebenen Konstruktion besteht darin, dass das Verletzungsrisiko der Person, die das im Behandlungsstand 1 aufgenommenen Tieres behandelt, deutlich minimiert wird, da nicht mehr die Gefahr besteht, dass ein Arm oder eine Hand des Behandlers durch eine Beaufschlagung durch eine Extremität des Tieres abgeschert oder gebrochen wird, wie dies z. B. der Fall sein kann, wenn der Behandlungsstand im Beinbereich Quer- oder Längsstreben aufweist, gegen die eine Extremität des Behandlers gepresst werden kann.

Wie am besten der Figur 4 zu entnehmen ist, ist der Behandlungsstand 1 vorzugsweise deutlich länger als die Länge des in ihm zu behandelnden Tieres ausgebildet. Bevorzugt wird, dass die Seitenwandungen 2a, 2b die 1,5- bis 2-fache Länge des Tieres aufweisen. Eine derartige Maßnahme besitzt den Vorteil, dass durch ein Vor- oder Rückwärtsführen des Tieres zwischen den Seitenwandungen 2a, 2b ermöglicht wird, wodurch insbesondere dessen Gliedmaßen leicht in einer gewünschten Position ausgerichtet werden können. Diese Bewegbarkeit des Tieres in der Längsrichtung des Behandlungsstandes ist insbesondere dann von Vorteil, wenn - wie in Figur 4 dargestellt - ein Vorderbein B des Tieres auf ein Behandlungsgerät G, z. B. eine Rüttelplatte, wie sie in dem Gebrauchsmuster DE 20 2007 016 167 der Anmelderin beschrieben ist, gestellt werden soll. Hierzu ist es erforderlich, dass das Tier an das Behandlungsgerät G derart herangeführt wird, dass sein zu behandelndes Bein B in einer gewünschten Art und Weise auf das Behandlungsgerät G auftritt. Durch die beschriebene Konstruktion des Behandlungsstandes 1 hat das darin aufgenommene Tier die Möglichkeit, sich dann auszubalancieren, und zwar vorzugsweise derart, dass das auf dem Behandlungsgerät G stehende Bein B des Tieres nur minimal belastet wird.

In diesem Zusammenhang ist es vorteilhaft, wenn der Behandlungsstand 1 deutlich breiter als die Breite des in ihm aufzunehmenden Tieres ist, so dass das zu behandelnde Tier nicht nur in der Längsrichtung des Behandlungsstands 1 ausgerichtet werden kann, sondern sich auch quer hierzu ausrichten kann bzw. ausgerichtet wird. Bevorzugt wird, dass der Abstand zwischen den Seitenwandungen 2a, 2b etwa das 1,5- bis 2-fache der Breite des Tieres beträgt.

Ein weiterer Vorteil einer derartigen Konstruktion ist, dass das Tier relativ frei beweglich in dem Behandlungsstand 1 aufgenommen ist, was Scheureaktionen entgegenwirkt. Insbesondere bei der Diagnose und/oder Behandlung eines verletzten Tieres ist es wichtig, dass dieses Tier sich möglichst natürlich bewegen kann, da nur dann mit hinreichender Sicherheit auf eine Verletzung oder eine Fehlfunktion des Bewegungsapparates des Tieres geschlossen werden kann.

Durch die auch im hinteren Bereich 1" des Behandlungsstandes 1 vorzugsweise weit voneinander beabstandeten Füße 4 ist es ebenfalls möglich, eines oder beide Hinterbeine auf das Behandlungsgerät G zu stellen. Dieses wird dann zwischen den beiden hinteren Füßen 4 in den Behandlungsstand 1 eingeschoben und anschließend das Tier dann durch eine entsprechende Rückwärtsbewegung darauf positioniert.

Wie ebenfalls der Figur 1 zu entnehmen ist, ist vorgesehen, dass die Seitenwandungen 2a, 2b in ihrem vorderen Bereich, also im "Kopfbereich" des Behandlungsstands und des darin aufgenommenen Tieres, auskragend ausgebildet sind, indem dort Aufsätze 6a, 6b vorgesehen sind, welche vorzugsweise integral mit einer oberen Längsstrebe 7a der Seitenwandungen 2a, 2b ausgeführt sind. Eine derartige Maßnahme besitzt den Vorteil, dass hierdurch eine Art Scheuklappen für das Tier ausgebildet werden, welche außerdem bewirken, dass das im Behandlungsstand 1 aufgenommene Tier, insbesondere ein Pferd, nicht durch ein Aufbäumen über die Seitenwandungen 2a, 2b des Behandlungsstands 1 springen kann.

Ebenfalls wird bevorzugt, dass die Seitenwandungen 2a, 2b in dem Bereich zwischen den vorderen Füßen 4 und ihrem vorderen Ende 2a', 2b' einer schräg nach oben verlaufenden Bereich 9 ausgeführt sind. Eine derartige Maßnahme besitzt den Vorteil, dass hierdurch Platz für den Behandler geschaffen wird, um z. B. - wie aus Figur 4 ersichtlich - leicht ein Bein des Tieres auf das Behandlungsgerät G stellen zu können.

Wie in den Figuren 1 bis 4 zu entnehmen ist, ist im ersten Ausführungsbeispiel vorgesehen, dass die Seitenwandungen 2a, 2b durch die obere Längsstrebe 7a, eine beabstandet zu ihr angeordnete mittlere Längsstrebe 7b und eine wiederum beabstandet angeordnete untere Längsstrebe 7c ausgebildet sind, welche durch Stützstreben 8a-8c miteinander verbunden sind. Eine derartige Konstruktion besitzt nicht nur den Vorteil, dass hierdurch der beschriebene Behandlungsstand 1 besonders leichtgewichtig baut. Vielmehr erlauben es die zwischen den Längsstreben 7a-7c und den Stützstreben 8a-8c befindlichen Zwischenräume 10, dass der Behandler auch leicht auf den Rumpfbereich des Tieres zugreifen kann. Es ist auch möglich, dass anstelle der hier beschriebenen drei Längsstreben 7a-7c auch nur eine Längsstrebe oder mehr als drei Längsstreben vorgesehen sind.

Vorzugsweise kann noch vorgesehen sein, dass der Behandlungsstand 1 einen Schlagschutz (nicht gezeigt) aufweist, der aus einem elastischen Material besteht und an die unteren Enden der Seitenwandungen 2a, 2b anbringbar und vorzugsweise wieder entfernbar ist. Es ist auch möglich, den Schlagschutz vorhangartig an den Seitenwandungen 2a, 2b anzuordnen, so dass er-wenn er nicht (mehr) benötigt wird - einfach weggeschoben wird. Bevorzugt wird hierbei, dass der Schlagschutz aus einem Kunststoffmaterial ausgebildet und vorzugsweise gepolstert ist.

Zur Figur 4 ist noch ergänzend auszuführen, dass die dort gezeigte Ausführungsform des ersten Ausführungsbeispiels sich von der in Figur 1 gezeigten Ausführungsform dadurch unterscheidet, dass an den Innenseiten der Seitenwandungen 2a, 2b eine Polsterung 11 vorgesehen ist, welche sich vorzugsweise auch auf den Bereich der Aufsätze 6a, 6b erstreckt.

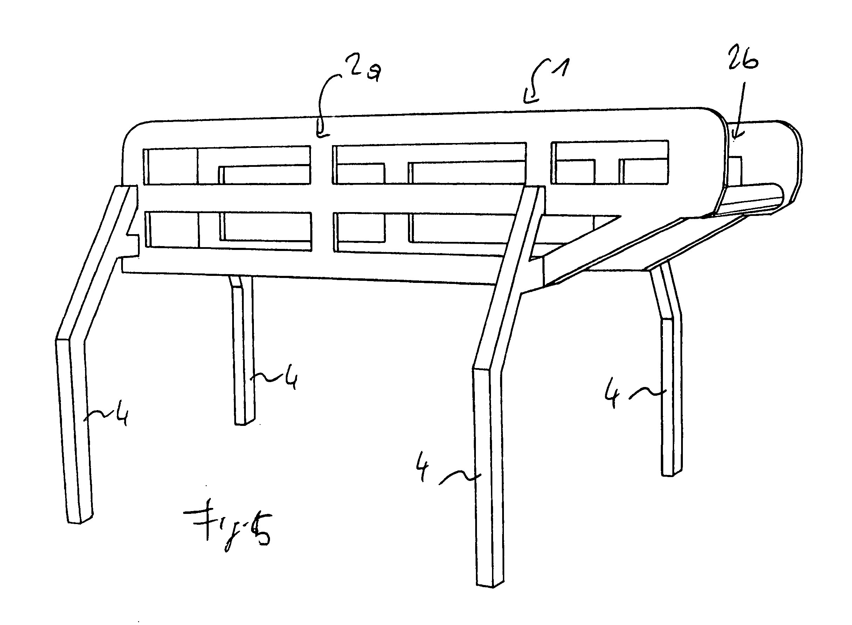

In Figur 5 ist ein zweites Ausführungsbeispiel des Behandlungsstandes 1 dargestellt, das seinem Grundaufbau nach demjenigen des ersten Behandlungsstandes entspricht, so dass andere entsprechende Bauteile mit den gleichen Bezugszeichen versehen und nicht mehr näher beschrieben werden. Der wesentliche Unterschied zwischen den beiden Ausführungsbeispielen ist - wie sich leicht durch einen Vergleich der Figuren 1 und 5 entnehmen lässt -, dass das zweite Ausführungsbeispiel des Behandlungsstandes 1 auf die durch die Aufsätze 6a, 6b ausgebildeten Scheuklappen verzichtet. Ein derartiger Behandlungsstand ist insbesondere dann ausreichend, wenn die zu behandelnden Tiere nicht - wie Fluchttiere wie z. B. Pferde - zu einem Aufbäumen neigen.

Um nun zu gewährleisten, dass ein Verletzungsrisiko des im Behandlungsstand 1 aufgenommenen Tieres durch ein derartiges Aufbäumen oder durch eine ähnliche Panikreaktion entsteht, wird bevorzugt, dass der längliche Grundkörper 3a der Querstrebe 3' an seinen beiden Seiten 3a', 3a" (siehe dazu Figur 3) Sperrelemente (nicht gezeigt) aufweist, durch die ein Wirkeingriff der Querstrebe 3' mit den Seitenwandungen 2a, 2b herstellbar ist. Die Querstrebe 3a weist eine Federeinrichtung auf, durch die mindestens ein Sperrelement oder beide in der Querstrebe 3' angeordnete Sperrelemente mit einer Federkraft beaufschlagbar sind, wobei die die Federkraft bewirkende Federeinrichtung eine Kennlinie aufweist, die derart gewählt ist, dass die von der Federeinrichtung auf das oder die Sperrelemente ausgeübte Federkraft innerhalb eines ersten Übergangsbereichs von einer ersten Federkraft in eine höhere zweite Federkraft übergeht. Durch eine derartig ausgebildete Querstrebe 3' ist es möglich, eine Art Panikfunktion für das Sperrelement 3 auszubilden, welche bewirkt, dass bei normaler Beaufschlagung dieses dazwischen beiden Seitenwandungen 2a, 2b befindlichen Durchgang versperrt, aber bei einer größeren Beaufschlagung die Sperrwirkung aufhebt und dadurch den Durchgang freigibt. Eine derartige Ausgestaltung eines Sperrelements ist in dem Gebrauchsmuster DE 20 2007 015 990 der Anmelderin, auf das zur Vermeidung von Wiederholungen Bezug genommen wird und dessen Offenbarung zum Gegenstand dieser Anmeldung gemacht wird, beschrieben.

Zusammenfassend ist festzuhalten, dass durch die beschriebenen Maßnahmen ein Behandlungsstand 1 ausgebildet wird, der sich dadurch auszeichnet, dass er bei einem einfachen Aufbau eine hinreichende Bewegungsfreiheit des in ihm befindlichen Tieres gewährleistet und ein ausreichend sicherer Zugriff einer außerhalb des Behandlungsstands befindlichen Person auf das Tier ermöglicht wird. Die weit ausladende Ausführung der von den Seitenwandungen 2a, 2b des Behandlungsstandes 1 abstehenden Füße 4 besitzen zum einen den Vorteil, dass sich die Füße 4 sich außerhalb des Schlagbereichs der Beine des Tieres befinden. Die hochgezogene Ausbildung der Seitenwandungen 2a, 2b besitzt den Vorteil, dass ein hinreichend großer Behandlungsraum für die Beine des Tieres zur Verfügung steht.

## Patentansprüche

1. Behandlungsstand für Tiere, insbesondere für Huftiere, der zwei voneinander beabstandet angeordnete, einen Innenraum des Behandlungsstands (1) festlegende Seitenwandungen (2a, 2b) aufweist, **dadurch gekennzeichnet, dass** die Seitenwandungen (2a, 2b) beabstandet von der durch die unteren Enden (4') der Füße (4) des Behandlungsstands (1) festgelegten Ebene angeordnet sind, und dass an den Seitenwandungen (2a, 2b) nach außen ausladend abstehende und schräg nach unten verlaufende Füße (4) angreifen, deren Auftreffpunkte (P) auf eine den Behandlungsstand (1) tragende Unterlage (5) beabstandet von den durch die Seitenwandungen (2a, 2b) festgelegten Ebenen sind.

2. Behandlungsstand nach Anspruch 1, **dadurch gekennzeichnet, dass** mindestens ein Fuß (4) des Behandlungsstandes einen von den Seitenwandungen (2a, 2b) ausgehend schräg nach unten geneigten ersten Bereich (4a) aufweist, an den sich ein im wesentlichen parallel zu der durch die zugehörige Seitenwandung (2a, 2b) aufgespannten Ebene paralleler Bereich (4b) anschließt.

3. Behandlungsstand nach Anspruch 1, **dadurch gekennzeichnet, dass** mindestens ein Fuß (4) einen von der Seitenwandungen (2a, 2b) schräg nach unten verlaufenden, im wesentlichen geradlinigen Verlauf aufweist.

4. Behandlungsstand nach einem der vorangehenden Ansprüchen, **dadurch gekennzeichnet, dass** mindestens ein Fuß (4') an seinem der Seitenwandung (2a, 2b) benachbarten Ende (4") einen gegabelten Verlauf besitzt.

5. Behandlungsstand nach einem der vorangehenden Ansprüche, **dadurch gekennzeichnet, dass** die Länge der Seitenwandung (2a, 2b) größer als die Länge des im Behandlungsstand aufzunehmenden Tieres ist, und/oder dass der Abstand der Seitenwandungen (2a, 2b) wesentlich größer als die Breite des in ihm zu behandelnden Tieres ist.

6. Behandlungsstand nach einem der vorangehenden Ansprüche, **dadurch gekennzeichnet, dass** der Behandlungsstand eine Bodenplatte (5) aufweist, die mit den Füßen (4) verbunden ist.

7. Behandlungsstand nach einem der vorangehenden Ansprüche, **dadurch gekennzeichnet, dass** mindestens eine Seitenwandung (2a, 2b) mindestens eine, vorzugsweise mindestens zwei voneinander beabstandet angeordnete Längsstreben (7a-7c) aufweist.

8. Behandlungsstand nach einem der vorangehenden Ansprüche, **dadurch gekennzeichnet, dass** mindestens zwei Längsstreben (7a, 7b; 7b, 7c) durch mindestens eine Stützstrebe (8a-Bc) miteinander verbunden sind.

9. Behandlungsstand nach einem der vorangehenden Ansprüche, **dadurch gekennzeichnet, dass** zwischen mindestens zwei Längsstreben (7a-7c) mindestens ein freier Zwischenraum (10) vorhanden ist.

10. Behandlungsstand nach einem der vorangehenden Ansprüche, **dadurch gekennzeichnet, dass** mindestens eine Seitenwandung (2a, 2b) an ihrem vorderen Ende (2a', 2b') einen Aufsatz (6a, 6b) aufweist.

11. Behandlungsstand nach einem der vorangehenden Ansprüche, **dadurch gekennzeichnet, dass** der Behandlungsstand (1) an seinem vorderen Ende (1') auskragend ausgeführt ist.

12. Behandlungsstand nach Anspruch 11, **dadurch gekennzeichnet, dass** mindestens eine Seitenwandung (2a, 2b) in ihrem vorderen Bereich (2a', 2b') einen schräg nach oben verlaufenden Bereich (9) aufweist.

13. Behandlungsstand nach einem der vorangehenden Ansprüche, **dadurch gekennzeichnet, dass** der Behandlungsstand (1) an mindestens einem Ende (1', 1") ein Sperrelement (3, 3') aufweist, durch welches ein durch die beiden Seitenwandungen begrenzter Durchgang absperrbar ist, und dass das Sperrelement (3) vorzugsweise als eine Querstrebe (3') ausgebildet ist.

14. Behandlungsstand nach Anspruch 13, **dadurch gekennzeichnet, dass** die Querstrebe (3') einen länglichen Grundkörper (3a) aufweist, an dessen beiden Enden (3a', 3a") Sperrelemente angeordnet sind, durch die ein Wirkeingriff der Querstrebe (3') mit den Seitenwandungen (2a, 2b) herstellbar ist, und dass die Querstrebe (3') eine Federeinrichtung aufweist, durch die mindestens ein Sperrelement mit einer Federkraft beaufschlagbar ist, und dass eine Kennlinie der Federeinrichtung derart gewählt ist, dass die von der Federeinrichtung auf das Sperrelement ausgeübte Federkraft innerhalb eines ersten Übergangsbereichs von einer ersten Federkraft in eine höhere zweite Federkraft übergeht.

15. Behandlungsstand nach einem der vorangehenden Ansprüche, **dadurch gekennzeichnet, dass** mindestens eine Seitenwandung (2a, 2b) eine Polsterung (11) aufweist.

## Claims

1. Treatment platform for animals, in particular for hoofed animals, comprising two side walls (2a, 2b) that are disposed at a distance from each other and define a interior space of the treatment platform (1), **characterized in that** the side walls (2a, 2b) are disposed at a distance from a plane defined by the lower ends (4') of legs (4) of the treatment platform (1), and that the legs (4), which engage on the side walls (2a, 2b), are projecting outwardly and downwardly so that contact points (P) of the legs (4) on a support (5) bearing the treatment platform (1) are distant from the planes defined by the side walls (2a, 2b).

2. Treatment platform according to claim 1, **characterized in that** at least one leg (4) of the treatment platform (1) has got a first part (4a) extending from the side wall (2a, 2b) downwardly inclined, and that a second part (4b) following the first part (4a) is essentially parallel to the plane defined by the corresponding side wall (2a, 2b).

3. Treatment platform according to claim 1, **characterized in that** at least one leg (4) protrudes essentially downwardly inclined from the side wall (2a, 2b) and is essentially straight.

4. Treatment platform according to one of the previous claims, **characterized in that** at least one leg (4) has got on its end (4') adjacent to the side wall (2a, 2b) a fogged shape.

5. Treatment platform according to one of the previous claims, **characterized in that** the length of the side wall (2a, 2b) is larger than the length of the animal to be contained in the treatment platform, and/or that the distance between the side walls (2a, 2b) is essentially larger than the width of the animal to be treated in the treatment platform (1),

6. Treatment platform according to one of the previous claims, **characterized in that** the treatment platform has got a ground plate (5) which is connected with the legs (4).

7. Treatment platform according to one of the previous claims, **characterized in that** at least one side wall (2a, 2b) has got at least one longitudinal bar (7a-7c), preferably two spaced apart longitudinal bars (7a-7c).

8. Treatment platform according to one of the previous claims, **characterized in that** at least two longitudinal bars (7a, 7b: 7b, 7c) are connected via a support bar (8a-8c).

9. Treatment platform according to one of the previous claims, **characterized in that** between at least two longitudinal bars (7a-7c) at least one free space (10) is provided.

10. Treatment platform according to one of the previous claims, **characterized in that** at least one side wall (2a, 2b) has got on its front end (2a', 2b') an attachment (6a, 6b).

11. Treatment platform according to one of the previous claims, **characterized in that** the treatment platform (1) has got in its front end (1') a protruding shape.

12. Treatment platform according to one of the previous claims, **characterized in that** at least one side wall (2a, 2b) has got in its front area (2a', 2b') an upwardly inclined area (9).

13. Treatment platform according to one of the previous claims, **characterized in that** the treatment platform comprises at at least one end (1', 1") a blocking element (3, 3'), by which a passage delimited by the two side walls (2a, 2b) can be blocked, and that the blocking element (3) is preferably provided as a cross bar (3').

14. Treatment platform according to claim 13, **characterized in that** the cross bar (3') has got an elongated body (3a), on whose both ends (3a', 3a") blocking elements are arranged, by which an engagement of the cross bar (3') with the side walls (2a, 2b) can be effected, and that the cross bar (3') has got resilient means by which at least one blocking element can be acted upon with a spring force, and that the characteristic line of the resilient means is chosen such that the spring force by which the resilient means acts upon the blocking element increases within a first transition area from a first spring force to a bigger second spring force.

15. Treatment platform according to one of the previous claims, **characterized in that** at least one side wall (2a, 2b) has got a padding (11).

## Revendications

1. Dispositif de traitement pour animaux, en particulier pour des ongulés, qui présente deux parois latérales (2a, 2b) disposées à distance l'une de l'autre, déterminant un espace intérieur du dispositif de traitement (1), **caractérisé en ce que** les parois latérales (2a, 2b) sont disposées à distance du plan déterminé par les extrémités inférieures (4') des pieds (4) du dispositif de traitement (1) et **en ce que**, sur les parois latérales (2a, 2b) sont placés des pieds (4) en déport vers l'extérieur et s'étendant obliquement vers le bas, dont les points de rencontre (P) sont sur un support (5) portant le dispositif de traitement (1) à distance des plans déterminés par les parois latérales (2a, 2b).

2. Dispositif de traitement selon la revendication 1, **caractérisé en ce qu'**au moins un pied (4) du dispositif de traitement présente une première zone (4a) partant des parois latérales (2a, 2b) inclinée obliquement vers le bas à laquelle s'adjoint une zone parallèle (4b), essentiellement parallèle au plan défini par la paroi latérale correspondante (2a, 2b).

3. Dispositif de traitement selon la revendication 1, **caractérisé en ce qu'**au moins un pied (4) présente depuis les parois latérales (2a, 2b), un trajet évoluant obliquement vers le bas, essentiellement rectiligne.

4. Dispositif de traitement selon l'une des revendications précédentes, **caractérisé en ce qu'**au moins un pied (4') possède, sur son extrémité (4") voisine de la paroi latérale (2a, 2b), un trajet ramifié.

5. Dispositif de traitement selon l'une des revendications précédentes, **caractérisé en ce que** la longueur de la paroi latérale (2a, 2b) est supérieure à la longueur de l'animal à recevoir dans le dispositif de traitement et/ou **en ce que** la distance des parois latérales (2a, 2b) est essentiellement supérieure à la largeur de l'animal à traiter dans celui-ci.

6. Dispositif de traitement selon l'une des revendications précédentes, **caractérisé en ce que** le dispositif de traitement présente une plaque inférieure (5) qui est reliée aux pieds (4).

7. Dispositif de traitement selon l'une des revendications précédentes, **caractérisé en ce qu'**au moins une paroi latérale (2a, 2b) présente au moins une, de préférence au moins deux traverses longitudinales (7a-7c) disposées à distance l'une de l'autre.

8. Dispositif de traitement selon l'une des revendications précédentes, **caractérisé en ce qu'**au moins deux traverses longitudinales (7a, 7b ; 7b, 7c) sont reliées l'une à l'autre par au moins un étai (8a-8c).

9. Dispositif de traitement selon l'une des revendications précédentes, **caractérisé en ce qu'**entre au moins deux traverses longitudinales (7a, 7c), au moins un espace intermédiaire libre (10) est présent.

10. Dispositif de traitement selon l'une des revendications précédentes, **caractérisé en ce qu'**au moins une paroi latérale (2a, 2b) présente un embout (6a, 6b) sur son extrémité avant (2a', 2b').

11. Dispositif de traitement selon l'une des revendications précédentes, **caractérisé en ce que** le dispositif de traitement (1) a une configuration en porte-à-faux au niveau de son extrémité avant (1').

12. Dispositif de traitement selon la revendication 11, **caractérisé en ce qu'**au moins une paroi latérale (2a, 2b) présente dans sa zone avant (2a', 2b'), une zone s'étendant obliquement vers le haut (9).

13. Dispositif de traitement selon l'une des revendications précédentes, **caractérisé en ce que** le dispositif de traitement (1) présente sur au moins une extrémité (1', 1"), un élément de blocage (3, 3') au travers duquel un passage délimité par les deux parois latérales peut être bloqué, et **en ce que** l'élément de blocage (3) est conçu de préférence comme une entretoise (3').

14. Dispositif de traitement selon la revendication 13, **caractérisé en ce que** l'entretoise (3') présente un corps de base longitudinal (3a) sur les deux extrémités (3a', 3a") duquel sont disposés des éléments de blocage par lesquels une mise en prise de l'entretoise (3') avec les parois latérales (2a, 2b) peut être produite, et **en ce que** l'entretoise (3') présente un système à ressort par lequel au moins un élément de blocage peut être alimenté par une force de ressort, et **en ce qu'**une courbe caractéristique du système à ressort est choisie de telle sorte que la force du ressort exercée par le système à ressort sur l'élément de blocage dans une première zone de transition se transmette d'une première force de ressort en une deuxième force de ressort supérieure.

15. Dispositif de traitement selon l'une des revendications précédentes, **caractérisé en ce qu'**au moins une paroi latérale (2a, 2b) présente un rembourrage (11).
